# EUROPEAN PATENT APPLICATION

(11) **EP 4 471 920 A1**
(43) Date of publication of application: **04.12.2024**
(21) Application number: 23743435.2
(22) Date of filing: 17.01.2023
(51) Int. Cl.: H01M 10/04, B23K 20/10, H01M 50/536, H01M 50/54, B23K 101/36

(54) **TAB GUIDE AND ELECTRODE TAB WELDING APPARATUS INCLUDING SAME**

(30) Priority: 24.01.2022 KR 20220010291; 13.01.2023 KR 20230005565
(71) Applicant: LG Energy Solution, Ltd., Seoul 07335 (KR)
(72) Inventor: PARK, Hoan Young, Daejeon 34122 (KR)
(74) Representative: Goddar, Heinz J.
(86) International application number: PCT/KR2023/000782
(87) International publication number: WO 2023/140588

(57) **Abstract**

A tab guide according to an embodiment of the present invention may press a plurality of electrode tabs so that the plurality of electrode tabs are gathered together.

The tab guide may include a contact part, which is in contact with the electrode tabs, and a mounting part in which the contact part is detachably mounted and which has higher rigidity than that of the contact part.

## Description

### TECHNICAL FIELD

### CROSS-REFERENCE TO RELATED APPLICATION

The present application claims the benefit of the priority of Korean Patent Application Nos. 10-2022-0010291, filed on January 24, 2022, and 10-2023-0005565, filed on January 13, 2023, which are hereby incorporated by reference in their entirety.

### TECHNICAL FIELD

The present invention relates to a tab guide, which presses a plurality of electrode tabs so that the plurality of electrode tabs are gathered together, and an electrode tab welding device including the tab guide.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type battery and prismatic type battery, in which an electrode assembly is embedded in a cylindrical or prismatic metal can, a pouch type battery in which an electrode assembly is embedded in a pouch type case made of an aluminum laminate sheet, and so on.

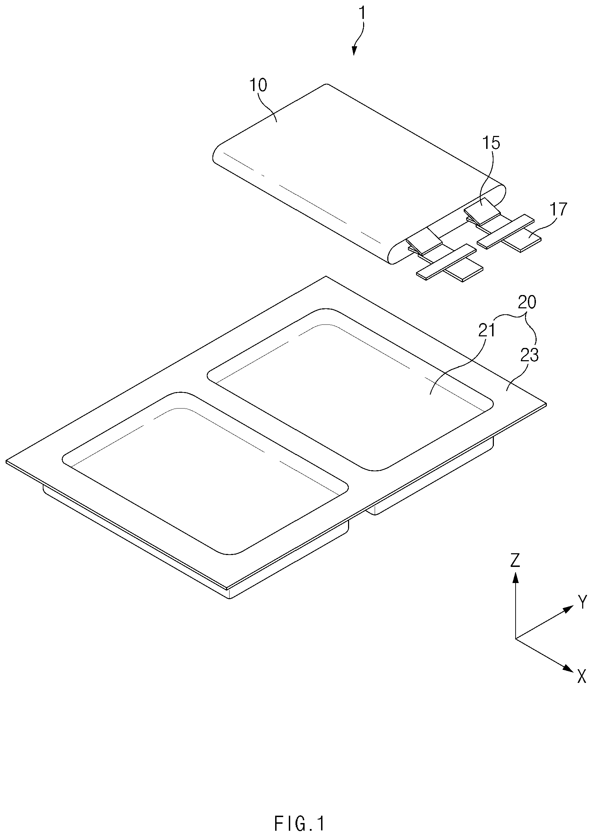

FIG. 1 is a view illustrating an example of a pouch type secondary battery.

A pouch type secondary battery 1 includes an electrode assembly 10, in which an electrode and a separator are provided to be alternately stacked, and a pouch 20 in which the electrode assembly 10 is accommodated.

The pouch 20 includes a cup part 21 having a recessed shape to accommodate the electrode assembly 10. The cup part 21 of the pouch 20 may be provided in one or two. FIG. 1 illustrates the pouch 20 including a pair of cup parts 21. A circumferential part 23 is formed around a circumference of the cup part 21 by sealing. The circumferential part 23 may be termed a terrace.

A plurality of electrode tabs 15 may be connected to a plurality of electrodes, respectively, of the electrode assembly 10. The plurality of electrode tabs 15 may be welded to each other in a predetermined region and then, be connected to an electrode lead 17.

During such a process of welding the plurality of electrode tabs 15, the plurality of electrode tabs 15 may be welded to each other in a state of being gathered together by a tab guide. As the tab guide is gradually worn down while the welding is repeated, replacement work is required at fixed intervals for maintenance and repair.

According to the related art, there are problems that this replacement work is cumbersome and time consuming and consumption costs of the tab guide are high. In addition, there is a concern that alignment of the tab guide, such as horizontality or parallelism, may be misaligned during the replacement of the tab guide and thus, welding quality of the plurality of electrode tabs may be reduced.

### DISCLOSURE OF THE INVENTION

### TECHNICAL PROBLEM

An object of the present invention for solving the above problems is to provide a tab guide, which is quickly replaceable and of which consumption costs are low, and an electrode tab welding device including the tab guide.

Another object of the present invention for solving the above problems is to provide a tab guide capable of maintaining welding quality of a plurality of electrode tabs to be high, and an electrode tab welding device including the tab guide.

### TECHNICAL SOLUTION

A tab guide according to an embodiment of the present invention may press a plurality of electrode tabs so that the plurality of electrode tabs are gathered together. The tab guide may include a contact part, which is in contact with the electrode tabs, and a mounting part in which the contact part is detachably mounted and which has higher rigidity than that of the contact part.

The contact part may have a surface friction coefficient lower than a surface friction coefficient of the mounting part.

The surface friction coefficient of the contact part may be 0.1 or less.

The mounting part may have a metal material, and the contact part may have a non-metal material.

The contact part may have a polyetheretherketone, polyamide, or alumina material.

The contact part may have wear resistance lower than wear resistance of the mounting part.

A material of the contact part may satisfy a condition that an abrasion loss of a disk, which is made of the material and rotates at 100 RPM, is 0.15 g or less in a wear test in which a ball having an alumina material is pressed against the disk at a load of 15 kgf for two hours.

The contact part may include a main body, which is detachably mounted on the mounting part, and a protrusion which is connected to the main body, protrudes toward the electrode tabs, and has a smaller thickness than that of the main body.

A coupling projection may be provided on one of the mounting part and the contact part, and a coupling groove that restricts the coupling projection may be defined in the other of the mounting part and the contact part.

The coupling projection and the coupling groove may extend to be parallel to a width direction of the electrode tabs.

The mounting part may have a size greater than that of the contact part.

A coupling hole coupled to an elevating device, which elevates the tab guide, may be defined in the mounting part.

An electrode tab welding device according to an embodiment of the present invention may weld a plurality of electrode tabs to each other. The electrode tab welding device may include a tab guide, which presses the plurality of electrode tabs so that the plurality of electrode tabs are gathered together, and a welding part which welds the plurality of electrode tabs gathered by the tab guide to each other. The tab guide may include a contact part, which is in contact with the electrode tabs, and a mounting part in which the contact part is detachably mounted and which has higher rigidity than that of the contact part.

### ADVANTAGEOUS EFFECTS

According to the preferred embodiments of the present invention, the contact part may be detachably mounted in the mounting part. Accordingly, the maintenance and repair may be possible by replacing the contact part alone without the need to replace the entire tab guide when the abrasion or the like occurs at the contact part. Thus, there are the advantages that the costs of the consumables of the tab guide may be reduced and the maintenance and repair of the tab guide may be simplified.

In addition, due to the high rigidity of the mounting part, the concern that the alignment of the tab guide is misaligned may be minimized, and the alignment of the contact part may be reliably maintained when the contact part is replaced in the mounting part. Accordingly, there is the advantage that the welding quality of the plurality of electrode tabs may be maintainable to be high.

In addition, the effects may be included which could be easily predicted by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a view illustrating an example of a pouch type secondary battery.
FIGS. 2 to 4 are schematic views for explaining a configuration and an operation of an electrode tab welding device according to an embodiment of the present invention.
FIGS. 5 and 6 are front views of a tab guide according to another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

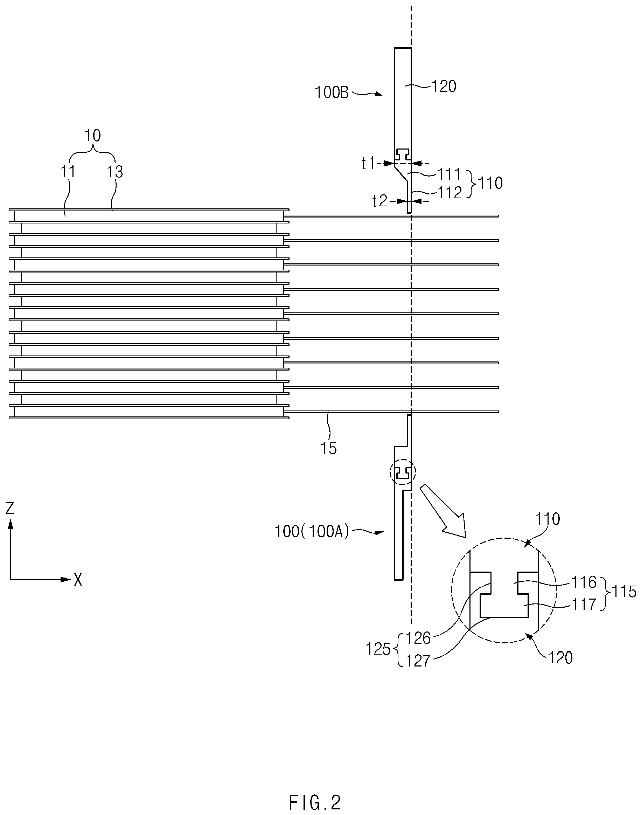

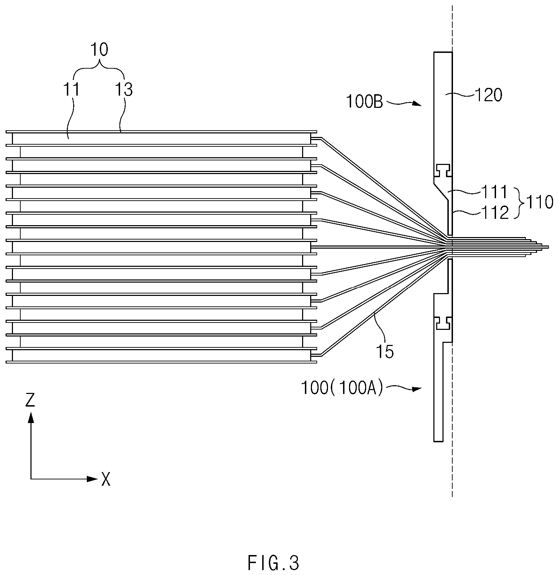

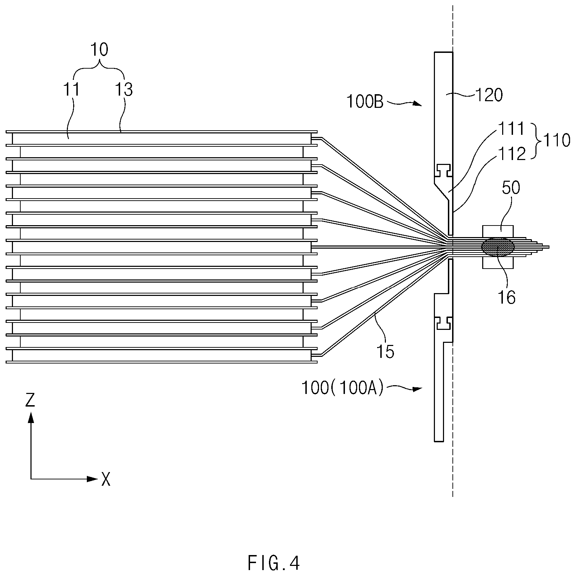

FIGS. 2 to 4 are schematic views for explaining a configuration and an operation of an electrode tab welding device according to an embodiment of the present invention. In more detail, FIG. 2 is a schematic view illustrating a state before a tab guide 100 gathers a plurality of electrode tabs 15, FIG. 3 is a schematic view illustrating a state in which the plurality of electrode tabs 15 are gathered by the tab guide 100, and FIG. 4 is a schematic view illustrating a state in which the plurality of electrode tabs 15 are welded to each other by a welding part 50.

The electrode tab welding device according to an embodiment of the present invention may weld the plurality of electrode tabs 15 provided in an electrode assembly 10 to each other. As illustrated in FIG. 2, the electrode assembly 10 may be provided by alternately stacking a plurality of electrodes 11 and a plurality of separators 13. The plurality of electrodes 11 may include a positive electrode and a negative electrode, and the electrode tabs 15 may be connected to the electrodes 11, respectively. Although the drawings illustrate only a negative electrode tab connected to the negative electrode for convenience of explanation, it could be easily understood by those skilled in the art that a positive electrode tab connected to the positive electrode may be also provided in the electrode assembly 10 and welded in the same manner as the negative electrode tab.

In more detail, the electrode tab welding device may include the tab guide 100, which presses the plurality of electrode tabs 15 so that the plurality of electrode tabs are gathered together, and the welding part 50 which welds the plurality of electrode tabs 15 gathered by the tab guide 100 to each other.

The tab guide 100 may be disposed at at least one side of the plurality of electrode tabs 15.

For example, the tab guide 100 may be provided in a pair to face each other with the plurality of electrode tabs 15 therebetween in a height direction (e.g., a direction parallel to a Z axis in FIG. 2) of the electrode assembly 10. In this case, the tab guides 100 may press the plurality of electrode tabs 15 at both sides, respectively. For example, the pair of tab guides 100 may include a lower tab guide 100A, which is disposed at a lower side of the plurality of electrode tabs 15, and an upper tab guide 100B which is disposed at an upper side of the plurality of electrode tabs 15.

A distance between the pair of tab guides 100 may be adjusted. To this end, at least one of the pair of tab guides 100 may be provided so as to be elevatable. As illustrated in FIG. 3, the pair of tab guides 100 may approach each other and press the plurality of electrode tabs 15 to gather the plurality of electrode tabs 15.

As a gap between the pair of tab guides 100 decreases, the pair of tab guides 100 may strongly press the plurality of electrode tabs 15.

However, an embodiment of the present invention is not limited thereto, and the tab guide 100 may be disposed at one side of the plurality of electrode tabs 15 and a general support (not shown) may be disposed at the other side.

Then, as illustrated in FIG. 4, the welding part 50 may weld the plurality of electrode tabs 15 gathered by the tab guide 100 to each other. That is, the welding part 50 may weld the plurality of electrode tabs 15 to each other so as to form a portion to be welded 16.

For example, the welding part 50 may perform ultrasonic welding on the plurality of electrode tabs 15. In this case, the welding part 50 may include an anvil, which is disposed at one side (e.g., a lower side) of the plurality of electrode tabs 15, and a horn which is disposed at the other side (e.g., an upper side) of the plurality of electrode tabs 15. The welding part 50 may be configured so that a distance between the anvil and the horn is adjusted. In a state in which the plurality of electrode tabs 15 are pressed between the anvil and the horn, the horn may undergo the ultrasonic vibration and accordingly, the plurality of electrode tabs 15 may be welded to each other.

The welding part 50 may be disposed to be farther away from the electrode assembly 10 than the pair of tab guides 100 are. In more detail, the portion to be welded 16 may be farther away from the electrode assembly 10 than a point at which the pair of tab guides 30 press the plurality of electrode tabs 15 is.

The electrode assembly 10, which is provided with the plurality of electrode tabs 15 welded to each other at the portion to be welded 16, may be manufactured through those processes. A pouch type battery may be manufactured by connecting an electrode lead to the plurality of electrode tabs 15 welded to each other and then accommodating the electrode assembly 10 in a pouch.

Meanwhile, the tab guide 100 according to an embodiment of the present invention may include a contact part 110, which is in contact with the electrode tabs 15, and a mounting part 120 in which the contact part 110 is detachably mounted and which has higher rigidity than that of the contact part 110.

As the contact part 110 is detachably mounted in the mounting part 120, maintenance and repair are possible by replacing the contact part 110 alone without a need to replace the entire tab guide 100 when abrasion or the like occurs at the contact part 110. Thus, costs of consumables of the tab guide 100 may be reduced, and the maintenance and repair of the tab guide 100 may be simplified.

The mounting part 120 may have a material that has higher rigidity than a material of the contact part 110. In more detail, the mounting part 120 may have a metal material, and the contact part 110 may have a non-metal material. In far more detail, the mounting part 120 may have a steel material. The contact part 110 may have a polyetheretherketone (PEEK) material. However, an embodiment of the present invention is not limited thereto, and the contact part 110 may have another material such as polyamide or alumina. Accordingly, due to the high rigidity of the mounting part 120, a concern that alignment of the tab guide 100 is misaligned may be minimized, and alignment of the contact part 110 may be reliably maintained when the contact part 110 is replaced in the mounting part 120.

The contact part 110 may have a surface friction coefficient lower than a surface friction coefficient of the mounting part 120. Thus, a concern that the electrode tabs 15 are damaged by friction caused by the contact part 110 may be prevented. Preferably, the surface friction coefficient of the contact part 110 may be 0.1 or less. This surface friction coefficient may be measured through DIN 53375 that is a known test. In addition, the surface friction coefficient of the contact part 110 may be 0.03 or higher, but is not limited thereto.

The contact part 110 may have wear resistance lower than wear resistance of the mounting part 120. This is because the mounting part 120 has higher rigidity than that of the contact part 110 as describe above. However, when the wear resistance of the contact part 110 is too low, there is a problem that a replacement cycle of the contact part 110 is short to lead to an increase in consumption costs. Thus, preferably the material of the contact part 110 may have predetermined wear resistance.

Preferably, an abrasion loss of a material of the contact part 110 may be 0.15 g or less in a known ball-on-disk wear test. In more detail, when a ball having an alumina material is pressed against a disk, which is made of the material and rotates at 100 RPM, at a load of 15 kgf for two hours, a condition that an abrasion loss of the disk is 0.15 g or less may be satisfied. If a material of the disk, of which an abrasion loss is 0.15 g or greater, is adopted as a material of the contact part 110, the contact part 110 has too low wear resistance and thus, is not suitable.

As an experimental example, in the ball-on-disk test, the abrasion loss was measured to be 0.103 g when the material of the disk is polyamide, the abrasion loss was measured to be 0.001 g when the material of the disk is polyetheretherketone (PEEK), and the abrasion loss was measured to be 0.013 when the material of the disk is alumina. That is, polyetheretherketone, polyamide, or alumina may be selected as the material of the contact part 110. In contrasts, when the material of the disk is zirconia, the abrasion loss was measured to be 0.892. That is, zirconia is inappropriate as the material of the contact part 110.

The contact part 110 may include a main body 111, which is detachably mounted on the mounting part 120, and a protrusion 112 which is connected to the main body 111 and protrudes toward the electrode tabs 15. The main body 111 and the protrusion 112 may be formed as one body.

Each of the main body 111 and the protrusion 112 may have a predetermined thickness in a longitudinal direction (e.g., a direction parallel to an X axis in FIG. 2) of the electrode tabs 15. The protrusion 112 may have a smaller thickness than that of the main body 111. In more detail, the main body 111 may have a first thickness t1, and the protrusion 112 may have a second thickness t2 smaller than the first thickness t1.

As the main body 111 is formed to be relatively thick, the main body 111 may be stably mounted on the mounting part 120. As the protrusion 112 is formed to be relatively thin, the protrusion 112 may precisely press and gather the electrode tabs 115.

As described above, the contact part 110 may be detachably coupled to the mounting part 120. In more detail, a coupling projection 115 may be provided on one of the contact part 110 and the mounting part 120, and a coupling groove 125 that restricts the coupling projection 115 may be defined in the other of the contact part 110 and the mounting part 120. Hereinafter, an example is described in which the coupling projection 115 is provided on the contact part 110 and the coupling groove 125 is defined in the mounting part 120.

The tab guide 100 may extend to be parallel to a width direction of the electrode tabs 15. The coupling projection 115 and the coupling groove 125 may extend to be parallel to the width direction of the electrode tabs 15. Thus, the contact part 110 may be coupled to and detached from the mounting part 120 by moving in the width direction of the electrode tabs 15. In addition, the contact part 110 may be restricted by the mounting part 120 in a width direction and a height direction of the tab guide 100.

In more detail, the coupling projection 115 may include a projecting portion 116, which protrudes from the contact part 110 toward the mounting part 120, and a hooking portion 117 which protrudes from an end of the projecting portion 116 to each of both sides in a thickness direction. The coupling groove 125 may include a narrow groove portion 126, into which the projecting portion 116 is inserted, and a wide groove portion 127 into which the hooking portion 117 is inserted. Thus, the hooking portion 117 of the coupling projection 115 may not pass through the narrow groove portion 126 of the coupling groove 125 and be restricted in the height direction of the electrode assembly 100.

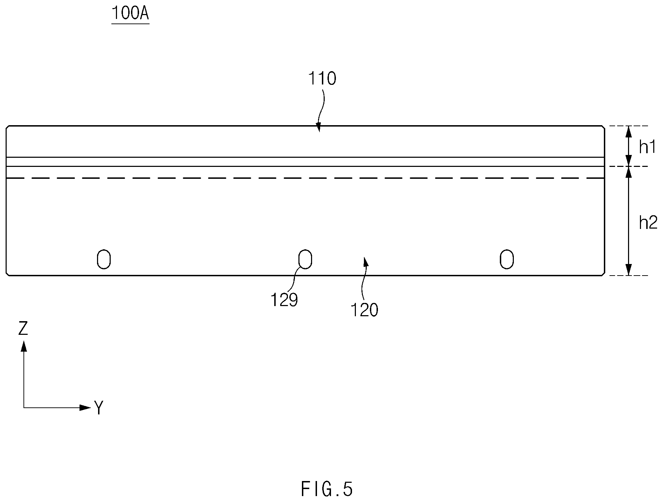

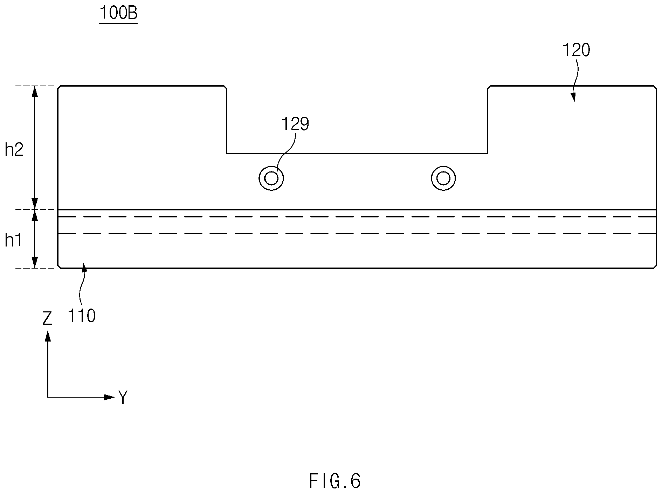

FIGS. 5 and 6 are front views of a tab guide according to another embodiment of the present invention. In more detail, FIG. 5 is a front view of a lower tab guide 100A among a pair of tab guides 100, and FIG. 6 is a front view of an upper tab guide 100B among the pair of tab guides 100.

Hereinafter, contents duplicated with the contents described above will be omitted.

In each of the tab guides 100, a height h2 of a mounting part 120 may be longer than a height h1 of a contact part 110. In addition, a width of the mounting part 120 and a width of the contact part 110 may be the same as or similar to each other. Thus, the mounting part 120 may have a size greater than that of the contact part 110. Accordingly, consumption costs of the contact part 110 may be reduced, and alignment of the contact part 110 may be more reliably maintained by the mounting part 120.

A coupling hole 129 coupled to an elevating device (not shown), which elevates the tab guide 110, may be defined in the mounting part 120. As the mounting part 120 has high rigidity, the coupling hole 129 may be stably coupled to the elevating device through a coupling member such as a screw. Thus, alignment of the tab guides 100 may be more reliably maintained.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 10: | Electrode assembly | 11: | Electrode |
| 13: | Separator | 15: | Electrode tab |
| 16: | Portion to be welded | 50: | Welding part |
| 100: | Tab guide | 100A: | Lower tab guide |
| 100B: | Upper tab guide | 110: | Contact part |
| 111: | Main body | 112: | Protrusion |
| 115: | Coupling projection | 120: | Mounting part |
| 125: | Coupling groove | 129: | Coupling hole |

## Claims

1. A tab guide that presses a plurality of electrode tabs so that the plurality of electrode tabs are gathered together, the tab guide comprising:
a contact part in contact with the electrode tabs; and
a mounting part in which the contact part is detachably mounted and which has higher rigidity than that of the contact part.

2. The tab guide of claim 1, wherein the contact part has a surface friction coefficient lower than a surface friction coefficient of the mounting part.

3. The tab guide of claim 1, wherein the surface friction coefficient of the contact part is 0.1 or less.

4. The tab guide of claim 1, wherein the mounting part has a metal material, and the contact part has a non-metal material.

5. The tab guide of claim 1, wherein the contact part has a polyetheretherketone, polyamide, or alumina material.

6. The tab guide of claim 1, wherein the contact part has wear resistance lower than wear resistance of the mounting part.

7. The tab guide of claim 1, wherein a material of the contact part satisfies a condition that an abrasion loss of a disk made of the material and configured to rotate at 100 RPM is 0.15 g or less in a wear test in which a ball having an alumina material is pressed against the disk at a load of 15 kgf for two hours.

8. The tab guide of claim 1, wherein the contact part comprises:
a main body detachably mounted on the mounting part; and
a protrusion connected to the main body, protruding toward the electrode tabs, and having a smaller thickness than that of the main body.

9. The tab guide of claim 1, wherein a coupling projection is provided on one of the mounting part and the contact part, and
a coupling groove configured to restrict the coupling projection is defined in the other of the mounting part and the contact part.

10. The tab guide of claim 9, wherein the coupling projection and the coupling groove extend to be parallel to a width direction of the electrode tabs.

11. The tab guide of claim 1, wherein the mounting part has a size greater than that of the contact part.

12. The tab guide of claim 1, wherein a coupling hole that is coupled to an elevating device configured to elevate the tab guide is defined in the mounting part.

13. An electrode tab welding device that welds a plurality of electrode tabs to each other, the electrode tab welding device comprising:
a tab guide configured to press the plurality of electrode tabs so that the plurality of electrode tabs are gathered together; and
a welding part configured to weld the plurality of electrode tabs gathered by the tab guide to each other,
wherein the tab guide comprises:
a contact part in contact with the electrode tabs; and
a mounting part in which the contact part is detachably mounted and which has higher rigidity than that of the contact part.
